# EUROPÄISCHE PATENTSCHRIFT

(11) **EP 1 082 269 B1**
(45) Veröffentlichungstag und Bekanntmachung des Hinweises auf die Patenterteilung: **18.12.2002**
(21) Anmeldenummer: 99947035.4
(22) Anmeldetag: 10.04.1999
(51) Int. Cl.: C02F 1/48, F02M 27/04

(54) **PHYSIKALISCHER FLÜSSIGKEITSBEHANDLER**
PHYSICAL LIQUID TREATMENT DEVICE
SYSTEME DE TRAITEMENT PHYSIQUE DE LIQUIDE

(30) Priorität: 29.04.1998 DE 29807704 U
(43) Veröffentlichungstag der Anmeldung: 14.03.2001
(73) Patentinhaber: Hagans, Friedrich, 99094 Erfurt (DE)
(72) Erfinder: Hagans, Friedrich, 99094 Erfurt (DE)
(74) Vertreter: Liedtke, Klaus, Dr.
(86) Internationale Anmeldenummer: DE9901084
(87) Internationale Veröffentlichungsnummer: WO99055624

(56) Entgegenhaltungen:
- WO-A-95/09816
- DE-A- 19 507 080
- DE-A- 19 513 775
- US-A- 5 161 512
- US-A- 5 453 188
- DATABASE WPI Section Ch, Week 8428 Derwent Publications Ltd., London, GB; Class H06, AN 84-173146 XP002113638 & JP 59 093954 A (NAKAJIMA N), 30. Mai 1984 (1984-05-30)

## Beschreibung

Die Erfindung betrifft einen physikalischen Flüssigkeitsbehandler zur Beeinflussung von Kraftstoffen in einem Rohrabschnitt aus nichtmagnetisierbarem Material, wobei außerhalb des Rohres mehrere Permanentmagnete symmetrisch angeordnet sind.

Für die physikalische Behandlung von Flüssigkeiten, insbesondere von Wasser oder von Kraftstoffen, sind eine Reihe von Systemen mit Permanentmagneten bekannt, die auf der Flüssigkeitsleitung angeordnet sind. Hierbei sind sowohl aus Rohrstücken bestehende mit ringförmigen oder flachen Magneten ausgerüstete Geräte als auch mehrteilige zum Aufsetzen auf Rohrleitungen ausgelegte Einrichtungen bekannt. Prinzipiell soll mit diesen Anordnungen erreicht werden, daß die jeweilige Flüssigkeit maximal in einem Magnetfeld durch dieses beeinflußt wird.

Nach DE 195 07 080 A1 ist eine Vorrichtung zur magnetischen Behandlung einer strömenden Flüssigkeit bekannt, die eine Mehrzahl von Baueinheiten mit Permanentmagneten aufweist, welche außen am Rohrabschnitt angebracht sind und bei der die beiden Pole jedes Permanentmagneten quer zur Strömungsrichtung der Flüssigkeit ausgerichtet sind und jeweils der gleiche Pol jedes Permanentmagneten gegen die Flüssigkeit und der jeweils andere Pol von der Flüssigkeit weg gerichtet ist.

Nach US-PS 5 161 512 ist eine weitere Vorrichtung bekannt, bei der jeweils in einer Ebene drei gleichartige Magnete in einem Winkel von 120° versetzt angeordnet sind. Als Magnete kommen dabei sowohl Flachmagnete als auch schraubenförmig verdrillte Magnetanordnungen zur Anwendung.

Ferner ist in DE 195 13 775 A 1 eine Baueinheit zur Entkalkung von Wasser beschrieben, bei der in einem ein- oder zweiteiligem Verbundkörper nebeneinanderliegende Magnetsegmente angeordnet sind, die ein inhomogenes Feld erzeugen sollen, und bei dem eine zweiteilige Ausführung durch einen zusätzlichen auf die Halbschalen aufgebrachten Mantel verbunden werden kann.

Bei allen bekannten Einrichtungen zur magnetischen Beeinflussung von strömenden Flüssigkeiten ist nachteilig, dass diese wegen ihrer inhomogenen Feldverläufe nur eine geringen Wirkungsgrad aufweisen und demzufolge eine hohe Magnetmasse erfordern. Die Anordnung der Magnetsysteme erfolgt in starren Körpern, wodurch die Geräte an gebogenen Leitungen nicht angebracht werden können und bei Unebenheiten von Rohroberflächen nicht vollständig am Rohr anliegen, wodurch der Wirkungsgrad verringert wird.

Der Erfindung liegt die Aufgabe zugrunde, einen Flüssigkeitsbehandler der eingangs genannten Art anzugeben, mit dem der Wirkungsgrad gegenüber den bekannten Einrichtungen erhöht wird und der kostengünstig herstellbat ist.

Erfindungsgemäß gelingt die Lösung der Aufgabe mit den kennzeichnenden Merkmalen von Patentanspruch 1.

Vorteilhafte Ausgestaltungen der erfindungsgemäßen Anordnung sind in den Unteransprüchen angegeben.

Die Erfindung zeichnet sich durch eine Reihe von Vorteilen aus. Die geometrische Anordnung der einwirkenden Magnetesysteme erfolgt in einander gegenüberliegender, sternförmig, kreuzweise oder versetzter Weise. Das daraus resultierende Magnetfeld wird durch Elementsysteme erzeugt, die in Fließrichtung des zu beeinflussenden Mediums linear hintereinander in verschiedenen Winkelstellungen versetzt wirken.

Vorzugsweise wird das durch die Permanentmagnete erzeugte Magnetfeld von paarweise gegenüberliegenden gegenpolig wirkenden Feldern hervorgebracht, die sich in hintereinander folgender Anordnung in wendelförmiger Form bei etwa gleichem räumlichen Abstand der Magnete über die gesamte Länge der Anordnung erstrecken und dadurch ein wendelförmiges Magnetfeld bewirken. Die Einzelmagnete sind gegenpolig angeordnet, wobei vorzugsweise die jeweiligen Nordpole auf das durchströmte Rohr gerichtet sind. Die jeweils hintereinander liegenden Magnetpaare sind vorzugsweise in einem linearen Abstand angebracht, der dem 1,5 bis 2-fachen ihrer Länge entspricht. Die wendelförmig angeordneten Magnetpaare werden in zwei Halbschalen aus vorzugsweise elastischem Kunststoff eingebettet.

Zum Anbringen der Anordnung auf einem rohrförmigen Körper wird das erfindungsgemäße wendelförmige Magnetsystem in einem zusammenhängenden Formkörper untergebracht, was in einfacher Weise durch Umgießen hergestellt werden kann.
Die Verbindung des in zwei Halbschalen eingebetteten wendelförmigen Systems wird vorzugsweise durch ein Filmscharnier bewerkstelligt.
Die formschlüssige Sicherung der beiden Halbschalen kann mittels knopfoder leistenartiger Partner bei der Ausführung in elastischem Kunststoff bewirkt werden.
Durch die erfindungsgemäße Anordnung aller Magnetpartner in einem geschlossenem System werden die zu beeinflussenden Flüssigkeiten ohne besondere mechanische Einrichtungen durch ein räumlich gedrehtes Magnetfeld zwangsweise geführt, wobei keine zusätzlichen Vorrichtungen benötigt werden.
Durch das kompakte System der gegenpolig wirkenden paarigen Permanentmagnete wird für die Beeinflussung auf die jeweiligen Flüssigkeiten infolge des langen gedrehten Magnetfeldes eine vollvolumige Wirkung erreicht und gleichzeitig eine eine kurze gedrungene Bauweise ermöglicht. Dadurch kann der erfindungsgemäße Flüssigkeitsbehandler auch in räumlich beengte Raumverhältnissen leicht angebracht werden. Die Ausführung mit zwei Halbschalen kann einfach und ohne Hilfsmittel bei beliebigen Rohrsystemen angebracht werden.
Durch die Verwendung von elastischem Kunststoff zur Einbettung des Magnetsystems werden darüber hinaus Maßunterschiede und Ungenauigkeiten der Trägerelemente ausgeglichen.

Die Erfindung wird im Folgenden an einem Ausführungsbeispiel näher erläutert. In den zugehörigen Zeichnungen zeigen:
Figur 1 eine Anordnung, bei der in einer Halbschale vier Permanentmagnete angeordnet sind,
Figur 2 die radiale Anordnung mehrerer hintereinander angeordneter Permanetmagnetpaare,
Figur 3 eine perspektivische Darstellung einer weiteren Anordnungsmöglichkeit der Permanetmagnete
   und
Figur 4 ein Gestaltungsbeispiel für die Anordnung der Magnete in Halbschalen mit einem elastischen Verbindungselement.

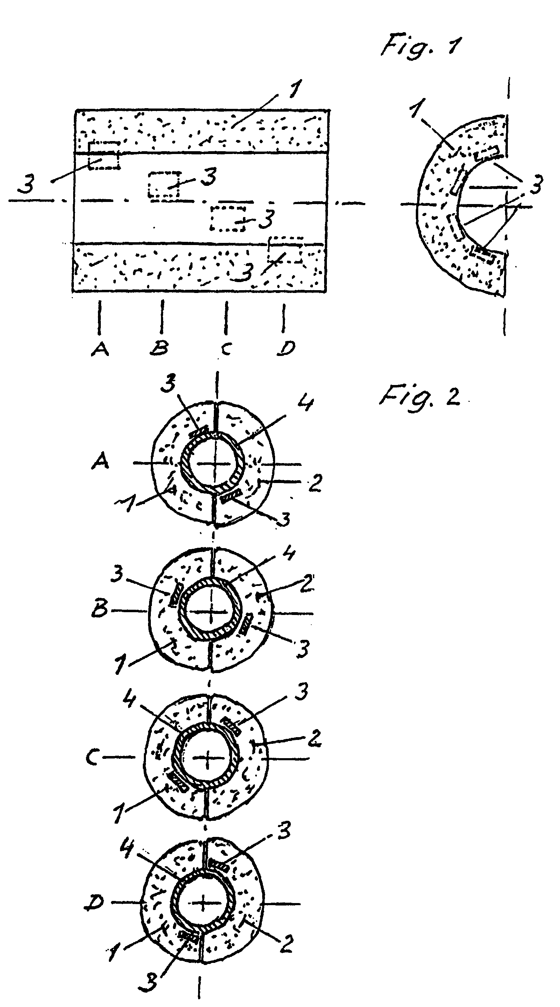

In Figur 1 ist eine eine Halbschale 1 dargestellt, in der vier Permanentmagneten 3 angebracht sind, wobei die Polarität so ausgerichtet ist, daß die magnetischen Nordpole der Einzelmagnete in das Zentrum der Anordnung gerichtet sind und die Magnete hintereinander, in Längsrichtung wendelförmig angeordnet sind.

Figur 2 erläutert in den vier Schnittdarstellungen A bis D die radiale Stellung der Einzelmagnete, die sich in Verbindung mit der zweiten Halbschale 2 über einem Rohr 4 ergeben. Die beiden Halbschalen 1 und 2 sind dabei in ihrer Ausführung gleich, so daß sich die Magnete 3 immer einander gegenüber befinden.

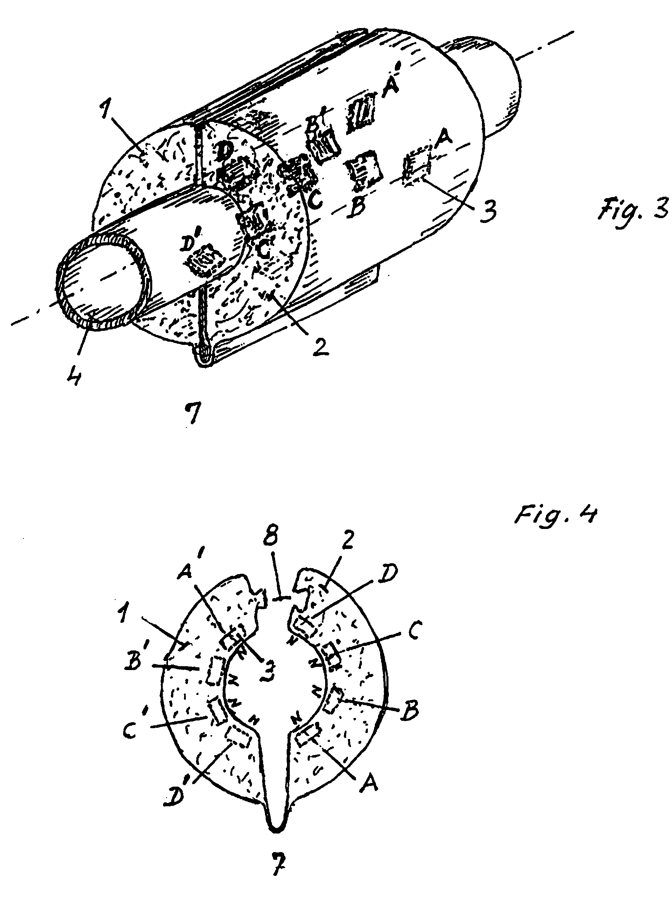

Figur 3 zeigt in perspektivischer Darstellung ein weiteres Anwendungsbeispiel der wendelförmig angeordneten Magnete 3 auf einem Rohr 4. Die beiden Halbschalen 1 und 2 befinden sich dabei in der geschlossenen Stellung. Zur Montage bzw. zur Demontage der Anordnung können die Halbschalen 1, 2 geöffnet werden. Die gegenüber liegenden Magnete 3 sind gestrichelt dargestellt, und mit A ... D bezeichnet. In der wendelförmigen Anordnung tragen die gegenüber liegenden Magnete die Bezeichnungen A'... D'.

Figur 4 zeigt eine Variante für die Gestaltung der Halbschalen 1 und 2, die hierbei mit Hilfe eines Filmscharniers 7 verbunden sind und die auf der Gegenseite durch eine leistenförmige formschlüssige Verbindung, die durch einen Keilverschluß 8 gebildet wird, gesichert werden.

### BEZUGSZEICHENLISTE

- 1,2: Halbschale
- 3: Permanetmagnet
- 4: Rohr
- 7: Filmscharnier
- 8: Keilverschluß

## Patentansprüche

1. Physikalischer Flüssigkeitsbehandler zur Beeinflussung von Flüssigkeiten in einem Rohrabschnitt aus nichtmagnetisierbarem Material, wobei außerhalb des Rohres (4) gegenüberliegende Permanentmagnete (3) angeordnet sind, **dadurch gekennzeichnet, dass** mehrere symmetrisch gegenüberliegende Flachmagnetpaare in Fließrichtung der zu beeinflussenden Flüssigkeit linear versetzt wendelförmig angeordnet sind, so dass das Magnetfeld hintereinander in verschiedenen Winkelstellungen wirkt, wobei alle magnetischen Nordpole der Permanentmagnete (3) in Richtung auf den Rohrabschnitt gerichtet sind und der Abstand der Permanentmagnetpaare (3) voneinander das 1,5- bis 2-fache der Magnetlänge beträgt und dass die Permanentmagnete (3) in einem aus zwei Halbschalen (1, 2) bestehenden zusammenhängenden Formkörper aus elastischem Kunststoff angeordnet sind.

2. Flüssigkeitsbehandler nach Anspruch 1, **dadurch gekennzeichnet, dass** die Halbschalen (1, 2) gleich ausgeführt sind und eine einseitige als Scharnier (7) ausgebildete Verbindung aufweisen.

3. Flüssigkeitsbehandler nach Anspruch 1 oder 2, **dadurch gekennzeichnet, dass** die Magnete in den Halbschalen eingegossen sind.

## Claims

1. Physical liquid conditioner for influencing liquids in a tube section of nonmagnetizable material, with opposing permanent magnets (3) being arranged outside the tube (4), **characterized in that** several symmetrically opposing flat magnet couples are arranged in a linear offset in the form of a helix in the flow direction of the liquid to be influenced, such that the magnetic field acts consecutively in different angular positions, with all magnetic north poles of the permanent magnets (3) being directed in the direction toward the tube section and the spacing between the permanent magnet couples (3) being 1.5 to 2 times the magnet length, and **in that** the permanent magnets (3) are arranged in a contiguous shaped body made of elastic synthetic material and consisting of two half shells (1, 2).

2. Liquid conditioner as claimed in claim 1, **characterized in that** the half shells (1, 2) are implemented equally and present a connection formed on a single side as a hinge (7).

3. Liquid conditioner as claimed in claim 1 or 2, **characterized in that** the magnets are moulded in in the half-shells.

## Revendications

1. Conditionneur physique de liquides pour influencer des liquides dans un tronçon de conduite en matériau non magnétisable, des aimants permanents (3) opposés étant disposés à l'extérieur de la conduite (4), **caractérisé en ce que** plusieurs paires d'aimants plats symétriquement opposées sont disposées dans le sens d'écoulement du liquide à influencer, linéairement décalées en hélice, de sorte que le champ magnétique agit dans différentes positions angulaires en série, tous les pôles nord magnétiques des aimants permanents (3) étant dirigés vers le tronçon de conduite et la distance des paires d'aimants permanents (3) entre elles représentant 1,5 à 2 fois la longueur des aimants, et **en ce que** les aimants permanents (3) sont disposés dans un corps moulé adhérent constitué de deux demi-coques (1, 2) en matière plastique élastique.

2. Conditionneur de liquides suivant revendication 1, **caractérisé en ce que** les demi-coques (1, 2) sont d'exécution identique et présentent un raccord unilatéral formé comme charnière (7).

3. Conditionneur de liquides suivant revendication 1 ou 2, **caractérisé en ce que** les aimants sont coulés dans les demi-coques.
